# EUROPEAN PATENT APPLICATION

(11) **EP 4 506 674 A1**
(43) Date of publication of application: **12.02.2025**
(21) Application number: 23905801.9
(22) Date of filing: 14.12.2023
(51) Int. Cl.: G01M 13/003, G01M 13/00

(54) **BATTERY SAFETY VALVE DETECTION APPARATUS AND METHOD, AND BATTERY**

(30) Priority: 19.12.2022 CN 202211634585
(71) Applicant: Hangzhou Gold Electronic Equipment Co., Ltd., Hangzhou, Zhejiang 311122 (CN)
(72) Inventor: XU, Jianhong, Hangzhou, Zhejiang 311122 (CN); ZHENG, Yi, Hangzhou, Zhejiang 311122 (CN); WANG, Hao, Hangzhou, Zhejiang 311122 (CN); ZHU, Lian, Hangzhou, Zhejiang 311122 (CN); LI, Zhenan, Hangzhou, Zhejiang 311122 (CN)
(74) Representative: JD&P Patent Attorneys Joanna Dargiewicz & Partners
(86) International application number: PCT/CN2023/138824
(87) International publication number: WO 2024/131636

(57) **Abstract**

A battery safety valve detection device includes a substrate fixedly provided on an outer side of a safety valve, and a first and a second detection strips provided on the substrate. The substrate is made of an insulating material, the first and second detection strips each are made of a conductor material, and there is a potential difference between the first and second detection strips; and a detection area is defined on a side of the substrate close to the safety valve, the first and second detection strips extend in the detection area, the first and second detection strips in the detection area are at least partially exposed on a surface of the substrate, and when the safety valve is opened, an electrolyte pollutes the detection area, so that the potential difference and/or a current between the first detection strip and the second detection strip changes.

## Description

### TECHNICAL FIELD

The present disclosure relates to the field of battery information detection, and in particular, to a battery safety valve detection device and method, and a battery.

### BACKGROUND

With the rapid development of the new energy industry, lithium-ion batteries, sodium-ion batteries, lead-acid storage batteries, and other electrochemical batteries are widely used. For electric vehicles, energy storage power stations, and other environments, it is necessary to use a large number of batteries connected in parallel and/or series to form high-voltage battery packs. Due to a design process and abuse of batteries and other reasons, and the huge number of batteries, the safety problems of batteries are increasingly prominent. During use of a battery, improper operation or some other reasons lead to safety problems. For example, in the case of severe overcharge, an internal temperature and pressure of the battery continuously increase. When a safety threshold of the battery is exceeded, the battery may explode. Other problems such as battery short circuit, severe overheating, thermal runaway, impact or extrusion deformation and puncture may also cause battery explosion.

A battery safety valve is the last explosion-proof barrier of the battery itself. When the internal pressure of the battery reaches a valve opening threshold of the safety valve (for example, valve opening thresholds of some lithium-ion battery safety valves are 600-800 KPa), in order to prevent explosion, the battery safety valve is opened for gas relief and pressure reduction. At this time, a gas inside the battery is discharged in large quantities, and an electrolyte inside the battery is also ejected with the release of pressure. Although the safety valve is opened to prevent explosion, chemical substances inside the battery that are leaked with the gas may also catch fire after chemical reaction with oxygen in the air at a high temperature. In addition, the battery with problems also affects safety of surrounding batteries, and it is necessary to give an alarm in time for intervention and perform subsequent replacement, and the like, otherwise the overall safe operation of a system is seriously affected.

In the prior art, in order to ensure the safe and effective operation of the battery, a state of the battery is detected and managed mainly by a battery management module. The current battery management module mainly measures a voltage, a temperature, and a charging/discharging current of the battery, and monitors insulation of a system. Since the safety valve itself does not have a physical quantity that can be monitored, the battery management module does not monitor the battery safety valve at present, and a small amount of information discloses monitoring by means of, for example, a valve opening sound signal and an air pressure signal.

### SUMMARY OF PRESENT INVENTION

In order to solve the above problems, a first objective of the present disclosure is to provide a battery safety valve detection device. The detection device is located on an outer side of a safety valve. Once the safety valve is opened, the detection device can detect an electrolyte sprayed out with a gas, so as to quickly and accurately know whether the battery safety valve is opened.

To achieve the first objective of the present disclosure, the following technical solutions are used:

A battery safety valve detection device includes a substrate fixedly arranged on an outer side of a safety valve, and a first detection strip and a second detection strip that are arranged on the substrate; the substrate is made of an insulating material, the first detection strip and the second detection strip each are made of a conductor material, and there is a potential difference between the first detection strip and the second detection strip; and a detection area is defined on a side of the substrate close to the safety valve, the first detection strip and the second detection strip extend in the detection area, the first detection strip and the second detection strip in the detection area are at least partially exposed on a surface of the substrate, and when the safety valve is opened, an electrolyte pollutes the detection area, so that the potential difference and/or a current between the first detection strip and the second detection strip changes.

Preferably, in the detection area, the first detection strip and the second detection strip are not connected to each other, so that when the first detection strip and the second detection strip are energized, there can be a potential difference. As a preferred manner of non-connection to each other, the first detection strip and the second detection strip extend side by side and are spaced apart by a distance, so that the first detection strip and the second detection strip are not in direct contact with each other. In addition, the first detection strip and the second detection strip cover most of a surface of the detection area, so that the first detection strip and the second detection strip can be connected together no matter where the safety valve is opened or where the electrolyte is splashed, so as to connect the first detection strip to the second detection strip, avoid missed detection, and improve detection sensitivity.

Preferably, multiple holes open toward a position of the safety valve are further defined in the detection area, and the holes are densely distributed between the first detection strip and the second detection strip. When the electrolyte is splashed, part of the electrolyte is kept in the holes. Therefore, the electrolyte flows to edges of the holes under the action of gravity, and then the first detection strip and the second detection strip are connected, so that the first detection strip can be connected to the second detection strip by means of only a very small amount of electrolyte.

Preferably, in the detection area, both the first detection strip and the second detection strip are spirally provided to cover the detection area to a maximum extent. More importantly, the spiral extension makes a spacing between the first detection strip and the second detection strip very small in each direction, so that the first detection strip can be connected to the second detection strip by means of a very small amount of electrolyte.

Preferably, the holes each have a diameter of 0.2-1 mm, and a distance between circle centers of adjacent holes is 0.4-1.5 mm. A smaller hole diameter and hole spacing make the holes densely distributed between the first detection strip and the second detection strip, and the collected electrolyte can be quickly spread in the detection area due to an effect of liquid surface tension, so that the electrolyte can quickly connect the first detection strip and the second detection strip on two sides of the holes.

Preferably, all or some of the holes run through an upper surface and a lower surface of the substrate; a protective layer is provided on a surface of the substrate facing away from the safety valve, the protective layer shields outer ends of all the holes, and the protective layer has a thickness of 5-20 µm. Allowing some of the holes to run through the substrate has the advantages that the air inside the battery can be discharged outward through the holes and does not continue to gather after the safety valve is opened. The protective layer has the advantage that the outer ends of the through holes are sealed, so that the outside air is prevented from entering the lower surface of the substrate through the holes and rapidly oxidizing the first detection strip and the second detection strip, and thus the service life of the detection device can be prolonged.

Preferably, the substrate has a sheet structure with a thickness of 0.2-1 mm, the first detection strip and the second detection strip each have a thickness of 50-200 µm and a width of about 0.2-1 mm, and the first detection strip and the second detection strip are copper foil or aluminum foil; and the first detection strip and the second detection strip are provided on the substrate by etching. The shape structure of the substrate, the first detection strip, and the second detection strip makes the detection device in a sheet shape, that is, the detection device only occupies a very small space, and the detection device does not change the shape of the battery after being mounted on the battery.

Preferably, in the detection area, the first detection strip and the second detection strip are provided on a lower surface of the substrate, so that lower portions of the first detection strip and the second detection strip are exposed to the outside as much as possible, and thus once the safety valve is opened, the electrolyte can be quickly splashed on the first detection strip and the second detection strip.

A second objective of the present disclosure is to provide a battery, including a housing and a cover plate provided at a top of the housing, where a safety valve is provided on the cover plate, and the battery safety valve detection device described above is provided on an outer side of the safety valve.

A third objective of the present disclosure is to provide a battery safety valve detection method, where the method uses the battery safety valve detection device described above, collects a potential difference and/or a current between a first detection strip and a second detection strip, and determines that a safety valve is opened when the potential difference and/or the current changes.

To sum up, the present disclosure has the following beneficial effects: A substrate is provided on an outer side of a safety valve, and a first detection strip and a second detection strip are provided on the substrate. Therefore, an electrolyte is in contact with the first detection strip and the second detection strip after being sprayed out from the safety valve, so that the first detection strip is connected to the second detection strip, and then resistance between the first detection strip and the second detection strip changes from original infinity to a smaller value. Therefore, the electrolyte is detected by measuring a resistance value between the first detection strip and the second detection strip, to achieve an objective of safety valve monitoring.

### BRIEF DESCRIPTION OF THE DRAWINGS

FIG. 1 is a sectional view of a battery;
FIG. 2 is a partial enlarged view of a part A shown in FIG. 1;
FIG. 3 is a schematic diagram of a top surface of a battery;
FIG. 4 is a perspective sectional view of a detection device according to Embodiment 1 viewed from a bottom;
FIG. 5 is a bottom view of the detection device according to Embodiment 1;
FIG. 6 is a top view of a substrate in Embodiment 1;
FIG. 7 is a schematic diagram of a battery pack;
FIG. 8 is a longitudinal sectional view of a detection device according to Embodiment 2;
FIG. 9 is a transverse sectional view of the detection device according to Embodiment 2;
FIG. 10 is a perspective view of a first detection strip and a second detection strip in Embodiment 2;
FIG. 11 is a top view of the first detection strip and the second detection strip in Embodiment 2;
FIG. 12 is a transverse sectional view of the detection device according to Embodiment 3;
FIG. 13 is a sectional view along line B-B shown in FIG. 12;
FIG. 14 is a longitudinal sectional view of a detection device according to Embodiment 3;
FIG. 15 is a longitudinal sectional view of a detection device according to Embodiment 4;
FIG. 16 is a schematic diagram of a side of the detection device according to Embodiment 4;
FIG. 17 is a transverse sectional view of the detection device according to Embodiment 4;
FIG. 18 is a longitudinal sectional view of a detection device and a safety valve according to Embodiment 5;
FIG. 19 is a longitudinal sectional view of the detection device according to Embodiment 5;
FIG. 20 is a schematic diagram of a first detection strip in Embodiment 5;
FIG. 21 is a top view of a lower substrate in Embodiment 5;
FIG. 22 is a top view of an intermediate substrate in Embodiment 5;
FIG. 23 is a schematic diagram of a second detection strip in Embodiment 5;
FIG. 24 is a schematic diagram of a detection device and a cover plate according to Embodiment 6; and
FIG. 25 is a longitudinal sectional view of the detection device according to Embodiment 6.

### DETAILED DESCRIPTION OF THE EMBODIMENTS

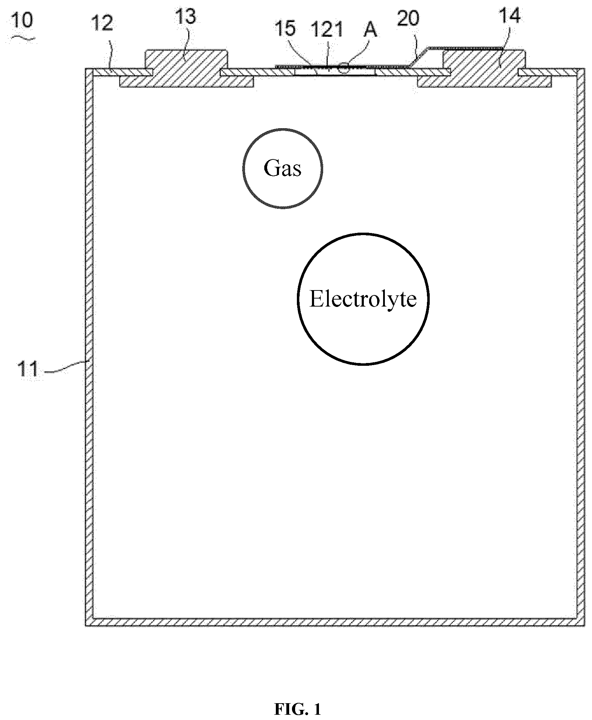

As shown in FIG. 1, a battery 10 includes a housing 11 and a cover plate 12 provided at a top opening of the housing 11. An electrolyte and a gas of the battery itself are provided in the housing 11, and two poles 13 and 14 with opposite polarities are provided on the cover plate 12. The two poles protrude outward to the outside of the battery (or are flat with the cover plate of the battery). A middle portion of the cover plate 12 is provided with a mounting port 121 that runs through an upper surface and a lower surface, and a safety valve 15 is provided in the mounting port 121. When the battery 10 is in a normal operating state, a gas pressure inside the battery 10 is less than a valve opening threshold of the safety valve 15, and the safety valve 15 is in a closed state. When the battery 10 is in an abnormal state (for example, due to overcharge, overdischarge, overheating and other abuse, an improper operation, or some other reasons), the gas pressure inside the battery 10 constantly increases. When the gas pressure exceeds the threshold of the safety valve 15 (for example, valve opening thresholds of some safety valves for lithium-ion batteries are 600-800 KPa), the safety valve 15 is opened, and the gas inside the battery 10 is sprayed outward, and further carries part of the electrolyte to be sprayed outward. It should be noted that the structure of the safety valve 15 is common general knowledge in the art, and is not repeated herein. Moreover, the safety valve 15 is usually disposable, that is, the safety valve cannot be closed once opened. Therefore, after the safety valve 15 is opened, the battery 10 needs to be repaired or replaced in time.

It can be seen from the above content that in order to detect the operating state of the battery 10, one of optional methods is to detect whether the safety valve 15 is open, and a small amount of electrolyte is bound to be brought out when the safety valve 15 is opened. Therefore, it may be chosen to detect the electrolyte to reflect the operating state of the battery. Therefore, the present application provides a battery safety valve detection device, which is sometimes referred to as a detection device 20 hereinafter.

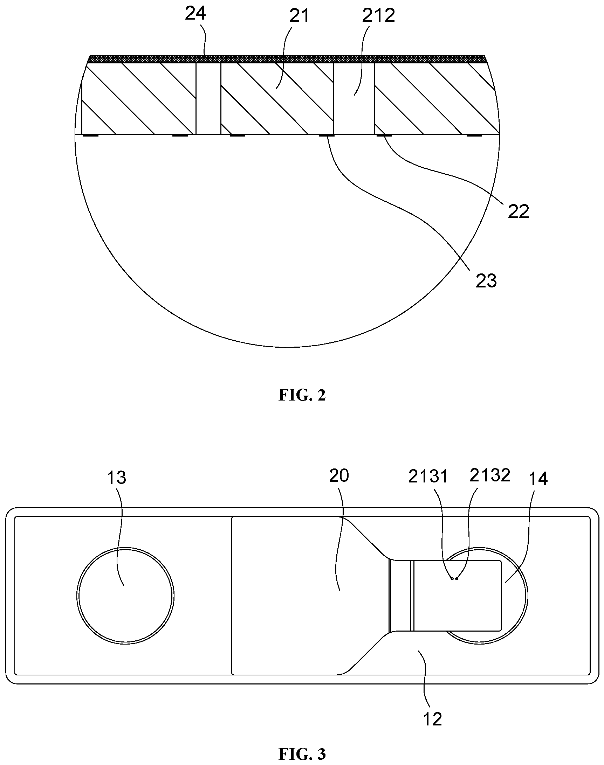

As shown in FIGS. 1 and 3, the detection device 20 is provided on the cover plate 12, and completely covers the mounting port 121, that is, the detection device 20 is located on an outer side of the safety valve 15. Once the safety valve 15 is opened, the gas inside the battery 10 carries part of the electrolyte to be sprayed outward and is splashed on a bottom surface of the detection device 20. It should be noted that when the internal gas is discharged outward, at least part of the detection device 20 can be broken, torn or even fractured, or a channel for gas discharge is reserved in the detection device 20, so that the gas can continue to be released to the outside, and the gas is prevented from continuing to accumulate inside the battery 10, which otherwise causes the internal structure of the battery 10 to be destroyed.

### Embodiment 1

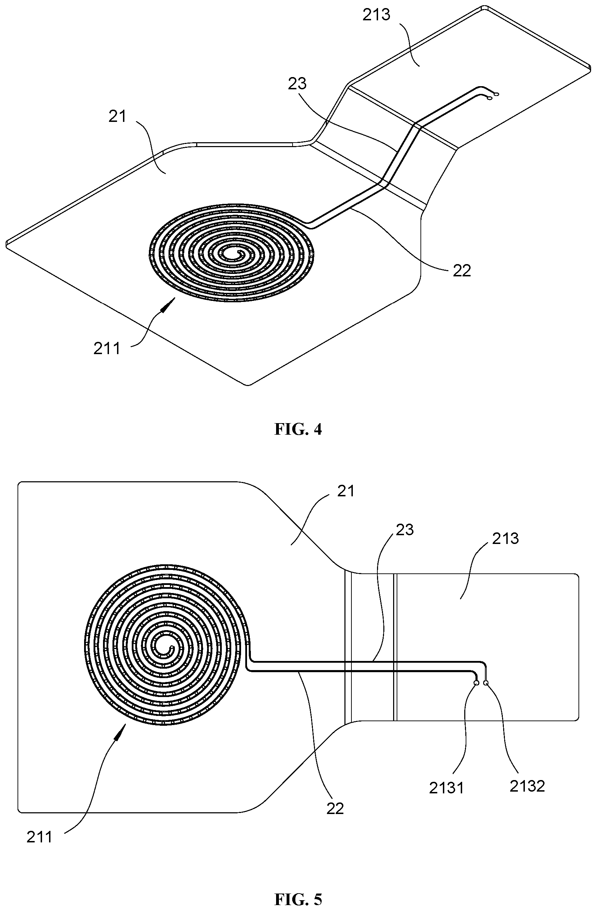

As shown in FIGS. 4, 5, and 6, the detection device 20 includes a substrate 21. In this embodiment, the substrate 21 has a sheet structure with a thickness of 0.2-1 mm, preferably 0.5 mm, so that the thickness of the whole detection device 20 is kept within a small range. After the detection device 20 is provided on the cover plate 12, an overall appearance of the battery 10 is not affected, and it is ensured that the battery 10 continues to be used in a normal operating space without needing to additionally expand a mounting space for the battery 10. In addition, the substrate 21 is made of an insulating material, and may be a hard material or a flexible material, but is preferably a thin film, especially a polyimide film. It should also be noted that the substrate 21 may have a single-layer structure or a composite structure with two or more layers. In addition, in order to fix the substrate 21 to the cover plate 12 conveniently, the substrate 21 may adhere to an outer surface of the cover plate 12, for example, by means of a sealant.

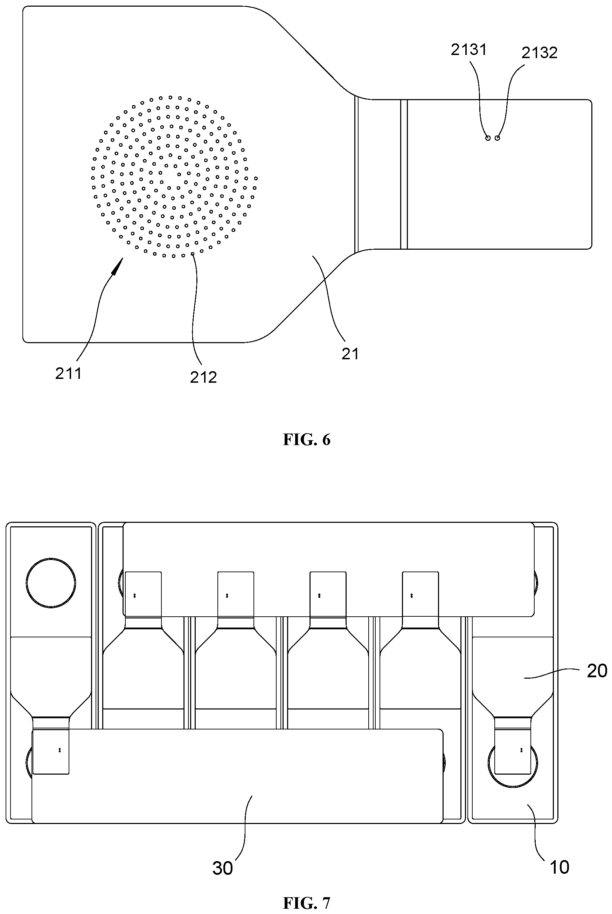

As shown in FIG. 6, a detection area 211 is provided on a bottom surface of the substrate 21, and a shape of the detection area 211 is slightly smaller than that of the mounting port 121. During mounting, the detection area 211 is provided corresponding to the mounting port 121, and the detection area 211 almost completely covers the mounting port 121. In this embodiment, the detection area 211 is circular, but other geometric shapes are not excluded, and the shape may be adaptively adjusted based on shapes of an actual mounting port 121 and safety valve.

As shown in FIGS. 4 and 5, in this embodiment, a first detection strip 22 and a second detection strip 23 are provided at a lower surface of the substrate 21, and the first detection strip 22 and the second detection strip 23 are spaced apart from each other by the substrate 21, so that the first detection strip and the second detection strip are not in contact with each other. Moreover, the first detection strip 22 and the second detection strip 23 each are made of a conductor material, such as a metal material, a semiconductor materials, or a nonmetallic material with good electrical conductivity, but are preferably copper foil or aluminum foil. As can be seen from the above structure, in the normal state, a resistance value between the first detection strip 22 and the second detection strip 23 is infinite. It can also be seen from the figure that the first detection strip 22 and the second detection strip 23 mainly extend in the detection area 211, and the first detection strip 22 and the second detection strip 23 are exposed in the detection area 211. Therefore, when the safety valve is opened, the electrolyte carried by the internal gas is splashed on the lower surface of the substrate 21, so that the first detection strip 22 and the second detection strip 23 are connected together, and the electrolyte has electrical conductivity. Therefore, the first detection strip 22 is connected to the second detection strip 23, so that resistance between the first detection strip 22 and the second detection strip 23 changes from original infinity to a smaller value, and thus the electrolyte can be detected by detecting the resistance value between the first detection strip 22 and the second detection strip 23.

It should be noted that the first detection strip 22 and the second detection strip 23 may be alternatively provided inside the substrate 21 instead of on the lower surface of the substrate 21. For example, when the substrate 21 has a multi-layer composite structure, the first detection strip 22 and the second detection strip 23 may be provided between two adjacent layers, but at this time, it is necessary to reserve, in the lower surface of the substrate 21, holes or channels for the electrolyte to be splashed into an interior, that is, the first detection strip 22 and the second detection strip 23 still need to be exposed at a surface of the detection area 211 of the substrate 21.

In order to improve accuracy of a detection result, the first detection strip 22 and the second detection strip 23 extend side by side and are spaced apart by a small distance, for example, by 0.2-1 mm. The first detection strip and the second detection strip each have a thickness of 50-200 µm, and a width of about 0.2-1 mm, and the first detection strip 22 and the second detection strip 23 need to cover most of the detection area 211. In this embodiment, both the first detection strip 22 and the second detection strip 23 are spirally and closely provided to cover the detection area 211 to a maximum extent.

In addition, as shown in FIG. 6, multiple holes 212 may be further provided in the detection area 211, and the holes 212 are provided toward a lower mounting port 121. The holes 212 each have a diameter of 0.2-1 mm, and a distance between circle centers of two adjacent holes 212 is 0.4-1.5 mm, so that the holes 212 are densely distributed in the detection area 211. Therefore, regardless of a position on a safety valve 15 where the gas is discharged, it can be ensured that corresponding holes 212 can be in contact with the electrolyte, and part of the electrolyte can be kept in the holes 212. The first detection strip 22 and the second detection strip 23 mentioned above are distributed around the holes 212, so that as long as a small amount of electrolyte is sprayed out, the electrolyte can be collected by the holes 212, and the first detection strip 22 and the second detection strip 23 on two sides of the holes 212 are connected to each other, which improves detection sensitivity. Preferably, the holes 212 are also spirally provided and are located between the first detection strip 22 and the second detection strip 23, so that the holes 212 can also cover most of the detection area 211. However, in other embodiments, a rectangular or circular array may be alternatively used for distribution. In addition, as mentioned above, in order to facilitate the outward discharge of the gas, some or all of the holes 212 run through an inner surface and an outer surface of the substrate 21, so that the gas can be directly discharged outward from these through holes 212.

As can be seen from FIGS. 4 and 5, the spiral extension of the above-mentioned holes 212, the first detection strip 22, and the second detection strip 23 can well cover most of the detection area 211, so that no matter where the safety valve is opened or where the gas and the electrolyte are sprayed out, the gas and the electrolyte can be in contact with the first detection strip 22 and the second detection strip 23 at corresponding positions. Moreover, because a spacing between the first detection strip 22 and the second detection strip 23 in each direction is very small, the first detection strip 22 and the second detection strip 23 can be connected only by means of a very small leakage. That is, the device can accurately detect whether the electrolyte leaks by monitoring the resistance value between the first detection strip 22 and the second detection strip 23, so as to determine whether the safety valve is opened.

In order to mount the first detection strip 22 and the second detection strip 23 firmly on the substrate 21, the first detection strip 22 and the second detection strip 23 may be provided by etching.

It is noted that after the holes 212 running through the upper surface and the lower surface of the substrate 21 are provided, outside air can enter a bottom of the substrate 21 through the holes 212, which may lead to oxidation of the first detection strip 22 and the second detection strip 23 and affect a detection result of the device. Therefore, in order to ensure that the detection device 20 can be used for a long time, it is necessary to protect the first detection strip 22 and the second detection strip 23. Generally, a protective layer 24 may be provided on the outer surface of the substrate 21, and the protective layer 24 covers at least an outer side of the detection area 211, and closes outer ends (which is for the through holes 212, while semi-closed holes 212 have no outer ends) of all the holes 212, so that after the detection device 20 is mounted on the cover plate 12, the outside air is separated from the first detection strip 22 and the second detection strip 23, thereby preventing rapid oxidation of the first detection strip 22 and the second detection strip 23.

Preferably, the protective layer 24 has a thin film structure, such as a polyethylene (PE) film or a parylene film. The protective layer 24 may be fixed by adhesion, but in this embodiment, the internal air needs to be discharged outward through the holes 212. Therefore, the thickness of the protective layer 24 should not be excessively large, and is preferably 5-20 µm, so that when the safety valve 15 is opened, the released gas can run through the holes 212 to rush or break through a corresponding position in the protective layer 24, thereby releasing a pressure.

As shown in FIGS. 5 and 6, an extension 213 is provided on a right side of the substrate 21, and the extension 213 is provided with a first connecting end 2131 and a second connecting end 2132. End portions of the first detection strip 22 and the second detection strip 23 extend to the extension 213 and are respectively connected to the first connecting end 2131 and the second connecting end 2132, and the first connecting end 2131 and the second connecting end 2132 are at least partially located on an outer surface of the detection device 20. Commonly, the first connecting end 2131 and the second connecting end 2132 are pads, to facilitate subsequent welding of wires to the first connecting end 2131 and the second connecting end 2132. As shown in FIG. 3, when the detection device 20 is mounted, the extension 213 is connected to one of poles.

It should be noted that the right portions of the first detection strip 22 and the second detection strip 23 that extend toward the first connecting end 2131 and the second connecting end 2132 are usually provided inside the substrate 21 without exposing on a surface of the substrate 21, so as to prevent the first detection strip 22 and the second detection strip 23 at these positions from being in contact with outside water or other liquids, which otherwise connects the first detection strip to the second detection strip and affects accuracy of the detection result.

Extension directions of the first connecting end 2131 and the second connecting end 2132 may be reasonably designed based on actual designs of a battery and a battery management module. For example, the extension directions are toward one end of a battery pole or are respectively toward two ends of the battery pole.

As shown in FIG. 3, each detection device 20 may be mounted on a cover plate 12 of a single battery to monitor a safety valve of each single battery. In addition, when a plurality of single battery 10 are connected in series, in parallel or in series and parallel to form a battery pack (see FIG. 7), poles with the same polarity in all the batteries 10 are connected together usually by means of metal bars 30 (usually aluminum bars or copper bars), and at this time, the detection device 20 on each battery 10 is connected to a corresponding metal bar 30 or pole.

A specific use process of the detection device 20 is as follows:

The substrate 21 is fixed to the outer surface of the cover plate 12 by adhesion, the detection area 211 completely covers the mounting port 121, and then the first detection strip 22 and the second detection strip 23 are exposed on the outer side of the safety valve 15. When the battery 10 is in a normal operating state, the first detection strip 22 and the second detection strip 23 are spaced apart by the substrate 21, and thus cannot be in direct contact with each other, so that the resistance value therebetween is infinite. When the battery 10 is in an abnormal state, the internal pressure of the battery 10 constantly increases. When the pressure exceeds the valve opening threshold of the safety valve 15, the safety valve 15 is opened, and the gas inside the battery 10 carries the electrolyte to be sprayed outward, rushes through the protective layer 24, and is released outward. The electrolyte is splashed on the bottom surface of the substrate 21 and into the holes 212, thereby connecting the first detection strip 22 and the second detection strip 23 at these positions. At this time, the resistance between the first detection strip 22 and the second detection strip 23 is reduced, so that whether the electrolyte leaks can be determined by collecting a potential difference and/or a current between the first connecting end 2131 and the second connecting end 2132 can be collected, and then whether the safety valve 15 is opened is determined, to reflect an operating state of the battery.

The detection device 20 has the advantages of simple structure, low manufacturing costs, high detection timeliness, and reliable detection results.

### Embodiment 2

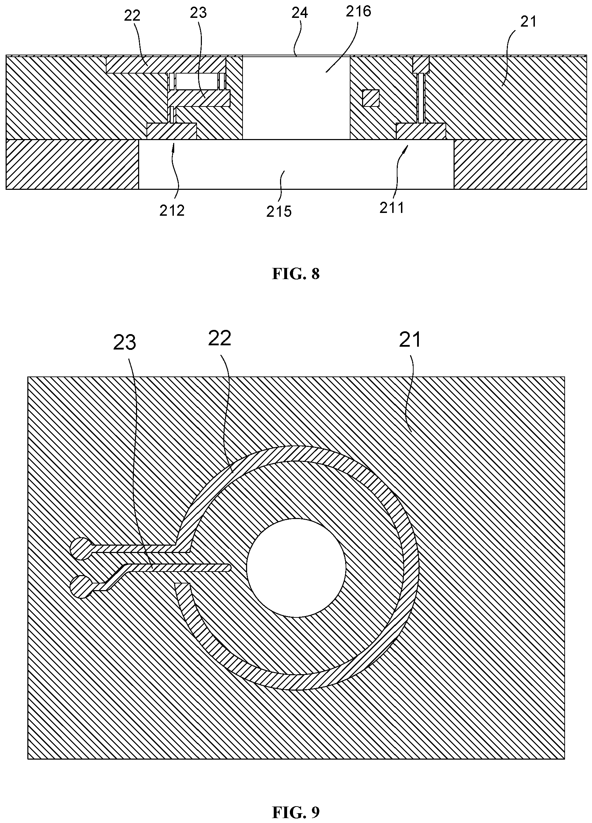

As shown in FIG. 8, in this embodiment, a connecting port 215 recessed upward is provided at a bottom of a substrate 21, and a detection area 211 is located in the connecting port 215. An exhaust port 216 running through an upper surface and a lower surface of the substrate 21 is provided at a top of the connecting port 215. In this embodiment, after a safety valve 15 is opened, a gas is discharged outward from the exhaust port 216. A first detection strip 22 and a second detection strip 23 are provided inside the substrate 21.

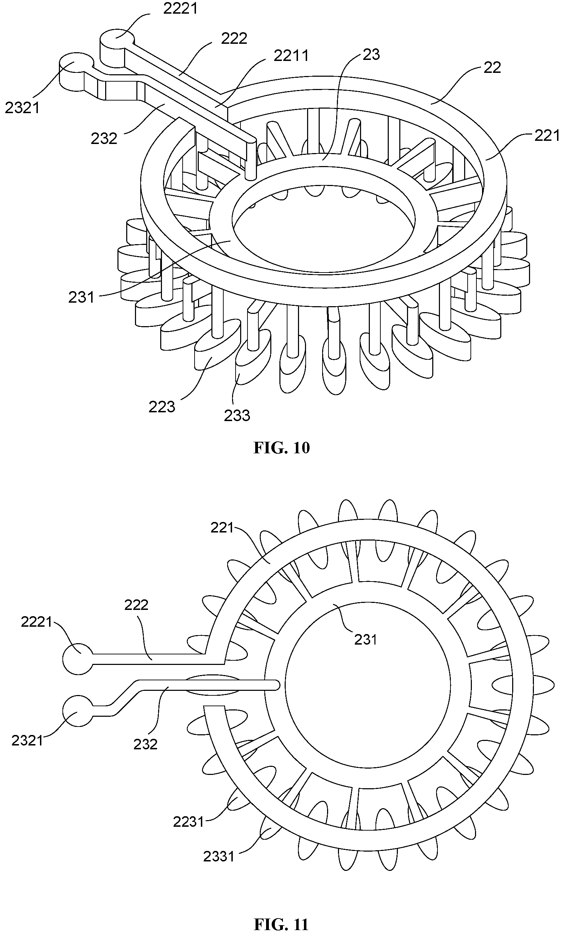

As shown in FIGS. 8 and 10, the first detection strip 22 includes a first body 221 provided inside the substrate 21, and the first body 221 is configured to fix the first detection strip 22 to the interior of the substrate 21. A first collecting portion 222 is provided on an upper portion of the first body 221, and an end portion of the first collecting portion 222 extends to the outer surface of the substrate 21, is connected to the first connecting end 2131, and is used as a first collecting end of the detection device 20. A first detection portion 223 is provided on a lower portion of the first body 221, and the first detection portion 223 extends to a position where the connecting port 215 is located. An end portion of the first detection portion 223 is exposed in the detection area 211 and is in contact with air herein, and is a first detection end of the detection device 20.

As shown in FIGS. 8 and 10, the second detection strip 23 includes a second body 231 provided inside the substrate 21, and the second body 231 is configured to fix the second detection strip 23 to the interior of the substrate 21. A second collecting portion 232 is provided on an upper portion of the second body 231, and an end portion of the second collecting portion 232 extends to the outer surface of the substrate 21, is connected to the second connecting end 2132, and is used as a second collecting end of the detection device 20. A second detection portion 233 is provided on a lower portion of the second body 231, and the second detection portion 233 extends to a position where the connecting port 215 is located. An end portion of the second detection portion 233 is exposed in the detection area 211 and is in contact with air herein, and is a second detection end of the detection device 20.

In this embodiment, after the safety valve 15 is opened, the electrolyte is splashed in the connecting port 215, so that the first detection end (first detection portion 223) and the second detection end (second detection portion 233) that are located in the connecting port 215 are connected to each other. Therefore, whether the electrolyte leaks can be determined by collecting a potential difference and/or a current between the first connecting end 2131 and the second connecting end 2132, and then whether the safety valve 15 is opened is determined, to reflect an operating state of a battery.

Specifically, as shown in FIGS. 10 and 11, in this embodiment, the first body 221 is in the shape of a ring and is concentrically provided with the connecting port 215, and a notch 2211 is formed on a side of the ring. The notch 2211 divides the first body 221 into two ends, one of which is connected to the first collecting portion 222. The first collecting portion 222 extends outward in a straight line, and a cylindrical first collecting terminal 2221 is formed on the end portion of the first collecting portion 222. The first detection portion 223 includes multiple circumferentially provided first detection terminals 2231. An upper end of each first detection terminal 2231 is connected to the first body 221, and a lower end of the first detection terminal 2231 is located in the connecting port 215.

As shown in FIGS. 10 and 11, the second body 231 is also in the shape of a ring, and is concentrically provided with the connecting port 215. In addition, the second body 231 is located below the first body 221, and a diameter of the second body 231 is less than that of the first body 221. The second collecting portion 232 extends out from the notch 2211 described above and extends outward in parallel with the first collecting portion 222. A cylindrical second collecting terminal 2321 is formed on the end portion of the second collecting portion 232. The second collecting terminal 2321 and the first collecting terminal 2221 are adjacently provided side by side to facilitate wiring of detection. The second detection portion 233 includes multiple circumferentially provided second detection terminals 2331. An upper end of each second detection terminal 2331 is connected to the second body 231, and a lower end of the second detection terminal 2331 is located in the mounting port 121. The second detection terminals 2331 and the first detection terminals 2231 are alternately provided.

The reason why a plurality of first detection terminals 2231 and second detection terminals 2331 are provided is that a large number of first detection ends and second detection ends are distributed in the mounting port 121, thereby improving accuracy and timeliness of detection. In order to further improve detection effects and accuracy, surface areas of the first detection terminals 2231 and the second detection terminals 2331 may be appropriately increased. For example, lower ends of the first detection terminals 2231 and the second detection terminals 2331 may be made oval (see FIG. 10).

Further, the first detection terminals 2231 and the second detection terminals 2331 are located on the same circumference to reduce a distance therebetween, but other arrangements of the first detection terminals 2231 and the second detection terminals 2331, for example, on different circumferences, are not excluded.

Preferably, bottom surfaces of the first detection terminals 2231 and the second detection terminals 2331 are provided on a top surface of the connecting port 215, so as to be in direct contact with the electrolyte leaked from the safety valve 15. Some or all of the bottom surfaces of the first detection terminals 2231 and the second detection terminals 2331 may be alternatively provided on side walls of a left side and a right side of the connecting port 215, so as to also be in contact with the electrolyte.

It should be noted that, because the housings 11 of some batteries are made of metal, in order to prevent the first detection end and the second detection end from being in direct contact with the housings 11 and thus being connected to each other, it is necessary to reserve a certain gap (for example, 1-3 mm) between each housing 11 and the first detection end and the second detection end when the device is mounted.

### Embodiment 3

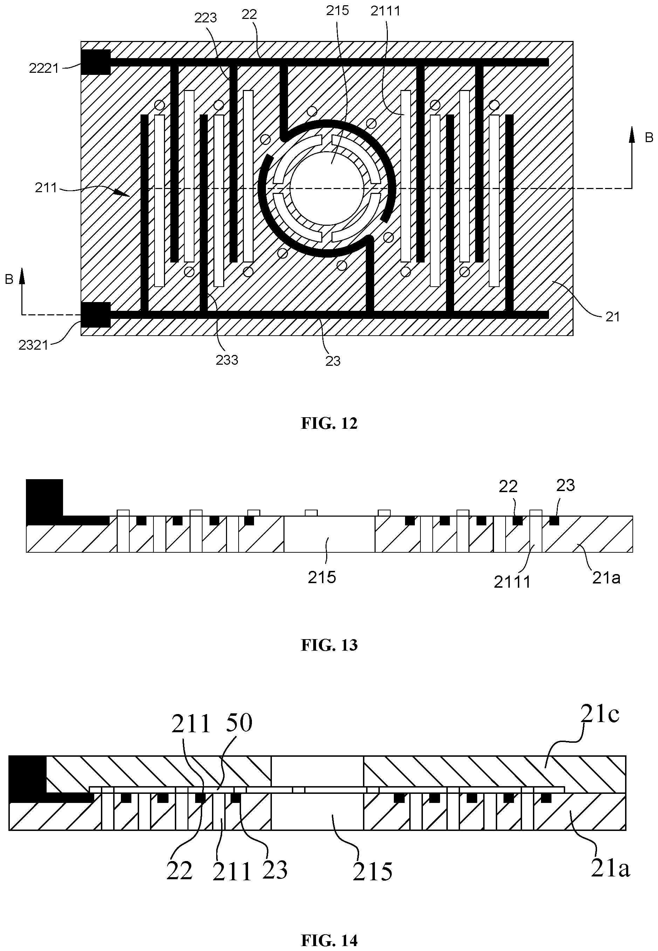

As shown in FIG. 14, in this embodiment, a substrate 21 is divided into an upper layer and a lower layer which are respectively denoted as a lower substrate 21a and an upper substrate 21c. As an example, the two layers of substrates 21 may be connected by concave-convex fitting. For example, an upper surface of the lower substrate 21a is provided with protrusions protruding upward, and a lower surface of the upper substrate 21c is provided with grooves recessed upward. The protrusions fit in the grooves to implement the connection between the two layers of substrates 21. A connecting port 215 that is vertically through is provided in a middle portion of the substrate 21, and the connecting port 215 is configured to allow a gas to be discharged outward.

FIG. 12 is a sectional view of a detection device 20. A connecting port 215 running through an upper surface and a lower surface is provided in a middle portion of the substrate 21, and the connecting port 215 corresponds to a safety valve 15. In this embodiment, after the safety valve 15 is opened, a gas is discharged outward from the connecting port 215. A detection area 211 is provided at a bottom of the substrate 21, and the detection area 211 extends inward to an interior of the substrate 21. The detection area 211 covers most of the substrate 21, so as to improve accuracy of detection and prevent missed detection. An accommodating area corresponding to the detection area 211 is provided on a bottom surface of the upper substrate 21c, and a shape of the accommodating area is close to or slightly greater than that of the detection area 211. The accommodating area is recessed upward and is fitted above the detection area 211, thereby forming a gap 50 between the upper and lower substrate 21a.

As shown in FIGS. 13 and 14, multiple detection channels 2111 running through an upper surface and a lower surface of the lower substrate 21a are provided in the detection area 211, so that the detection area 211 communicates with the outside, and a height of each detection channel 2111 (or a thickness of the detection area 211 in the lower substrate 21a) is not greater than 2 mm. Therefore, it is ensured that when there is an electrolyte at a bottom of the detection channel 2111, the electrolyte can flow upward along the detection channel 2111 and enter the gap 50 (see FIG. 14) between the upper and lower substrates 21a. Moreover, since the detection channel 2111 has a very small height, even if there is only a small amount of electrolyte at the bottom, the detection channel 2111 can still convey the electrolyte, thus ensuring the timeliness of detection.

In this embodiment, these detection channels 2111 are distributed in a length direction of the substrate 21 and extend in a straight line in a width direction, so that the detection channels 2111 are densely distributed in the substrate 21. Therefore, the detection channels 2111 can cover most of the surface of the substrate 21, so that the electrolyte from each position on the substrate 21 can enter a detection channel 2111 at a corresponding position. It should be noted that the detection channel 2111 may alternatively extend in a curved manner. For example, the detection channel 2111 is in the shape of an arc or a crease line.

As shown in FIG. 12, a first detection strip 22 and a second detection strip 23 are provided on the substrate 21. The first detection strip 22 and the second detection strip 23 are spaced apart by the substrate 21, and thus are not in direct contact with each other. In other words, in a normal state, resistance between the first detection strip 22 and the second detection strip 23 is infinite. The first detection strip 22 and the second detection strip 23 each have a plurality of detection portions, and these detection portions are distributed on two sides of the detection channels 2111 and are located in the gap 50. That is, an upper surface of each detection portion is in contact with the gap 50. When there is an electrolyte in the detection channel 2111, the electrolyte flows into the gap 50 and then into the detection portions. When a first detection portion 223 of the first detection strip 22 and a second detection portion 233 of the second detection strip 23 are connected by the electrolyte, the first detection strip 22 and the second detection strip 23 are connected to each other.

As shown in FIG. 12, the first detection strip 22 has a first collecting terminal 2221, and the first collecting terminal 2221 extends outward to a surface of the substrate 21, and is connected to a first connecting end 2131. The first detection strip 22 further has multiple first detection portions 223. The first detection portions 223 are distributed on a side of the detection channel 2111, and the first detection portions 223 extend in the same direction around the detection channel 2111, so as to ensure that the electrolyte at any position in the detection channel 2111 can be in contact with the first detection portions 223.

Similarly, the second detection strip 23 has a second detection terminal 2331, and the second detection terminal 2331 also extends outward to the surface of the substrate 21, and is connected to a second connecting end 2132. The second detection strip 23 further has multiple second detection portions 233. The second detection portions 233 are distributed on a side of the detection channel 2111, and extend in the same direction around the detection channel 2111, so as to ensure that the electrolyte at any position in the detection channel 2111 can be in contact with the second detection portions 233.

As shown in FIG. 12, a first detection portion 223 and a second detection portion 233 are respectively provided on two sides of each detection channel 2111, so that when there is an electrolyte in one of the detection channels 2111, the first detection portion 223 and the second detection portion 233 that are adjacent to this detection channel 2111 are connected to each other. Therefore, the first detection strip 22 is connected to the second detection strip 23, to ensure that the first detection portion 223 and the second detection portion 233 can accurately detect the electrolyte, ensure accuracy of a detection result, and prevent missed detection.

Optionally, as shown in FIG. 12, the first detection strip 22 and the second detection strip 23 are respectively provided at two ends of the detection channel 2111, and detection portions of the first detection strip and the second detection strip extend toward each other. Specifically, in this embodiment, the first detection strip 22 is provided at an upper end of the detection channel 2111, and the second detection strip 23 is provided at a lower end of the detection channel 2111. The first detection portion 223 extends from top to bottom and the second detection portion 233 extends from bottom to top.

When the detection device 20 in this embodiment is used, the electrolyte sprayed out from the safety valve 15 flows into the gap 50 along the detection channel 2111 and finally flows into the first detection portion 223 and the second detection portion 233 on two sides of the detection channel 2111, so that the first detection strip 22 is connected to the second detection strip 23. Therefore, whether the electrolyte leaks can be determined by collecting a potential difference and/or a current between the first connecting end 2131 and the second connecting end 2132, and then whether the safety valve 15 is opened is determined, to reflect an operating state of a battery.

### Embodiment 4

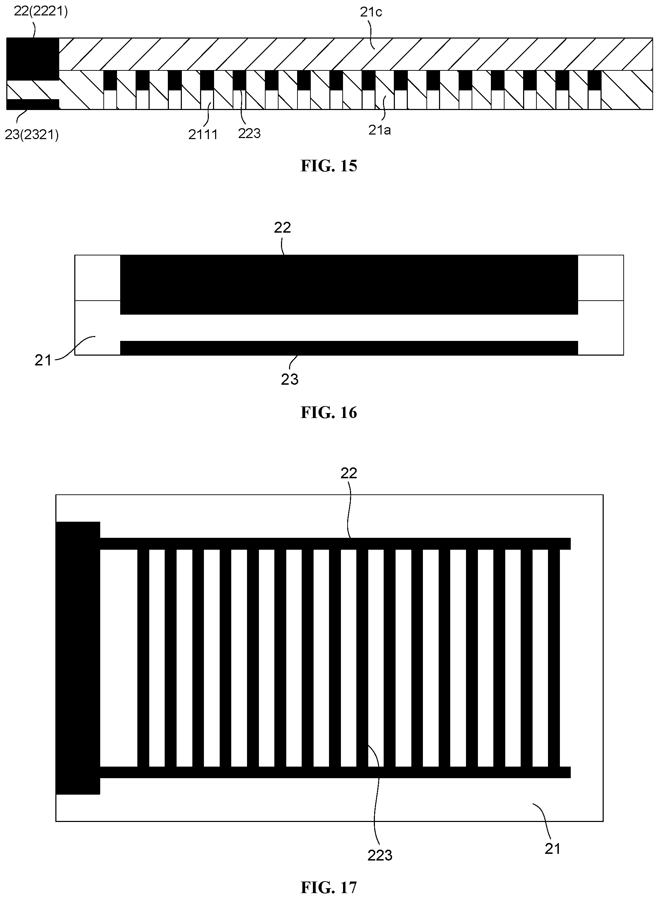

A detection device 20 in this embodiment needs to be provided on a pole of a metal housing. As shown in FIG. 15, similar to that in Embodiment 3, upper and lower substrates 21c and 21a are also provided in this embodiment, and a detection area 211 is provided at a bottom of the lower substrate 21a. Multiple detection channels 2111 open downward are provided in the detection area 211, and an upper end of each detection channel 2111 extends toward an interior of the lower substrate 21a. In addition, a first detection strip 22 and a second detection strip 23 are also provided on the substrate 21. The first detection strip 22 extends between connection surfaces of the upper and lower substrates 21c and 21a, and the first detection strip 22 covers substantially an entire cross section of the housing, so as to ensure accuracy and timeliness of subsequent detection. A first collecting terminal 2221 of the first detection strip 22 extends to an outer surface of the substrate 21 except a bottom surface, for example, extends to an upper surface of the upper substrate 21c in FIG. 15, is connected to a first connecting end 2131, and is used as a collecting end of the detection device 20. A second collecting terminal 2321 of the second detection strip 23 is provided on a bottom surface of the lower substrate 21a. Specifically, the second detection strip 23 is embedded in the bottom of the lower substrate 21a, so that the second detection strip is in direct contact with the pole of the metal housing. As another collecting end, the second detection strip may be considered as being connected to a second connecting end 2132.

When there is an electrolyte at the bottom of the substrate 21, the electrolyte flows toward an interior of the substrate 21 along the detection channel 2111, so that the electrolyte can be in contact with the first detection strip 22. At this time, under the action of the electrolyte, the first detection strip 22 is connected to the metal housing. Therefore, whether the electrolyte leaks can be determined by collecting a potential difference and/or a current between the first connecting end 2131 and the second connecting end 2132, and then whether a safety valve 15 is opened is determined, to reflect an operating state of a battery.

As shown in FIG. 15, the first detection strip 22 has multiple first detection portions 223, and these first detection portions 223 are opposite to the detection channels 2111 and preferably cover detection channels 2111 corresponding thereto, so that when there is an electrolyte in any detection channel 2111, first detection portions 223 at corresponding positions can be in contact with the electrolyte in time. Further, each first detection portion 223 may extend downward into a detection channel 2111, but at this time, it should be noted that the first detection portion 223 cannot be flush with a lower end of the detection channel 2111, otherwise a bottom of the first detection portion 223 is in contact with the metal housing, so that the first detection strip 22 is always connected to the second detection strip 23, leading to the failure to accurately detect the electrolyte. Generally, a distance of 1 mm is reserved between the bottom of the first detection portion 223 and the lower end of the detection channel 2111.

### Embodiment 5

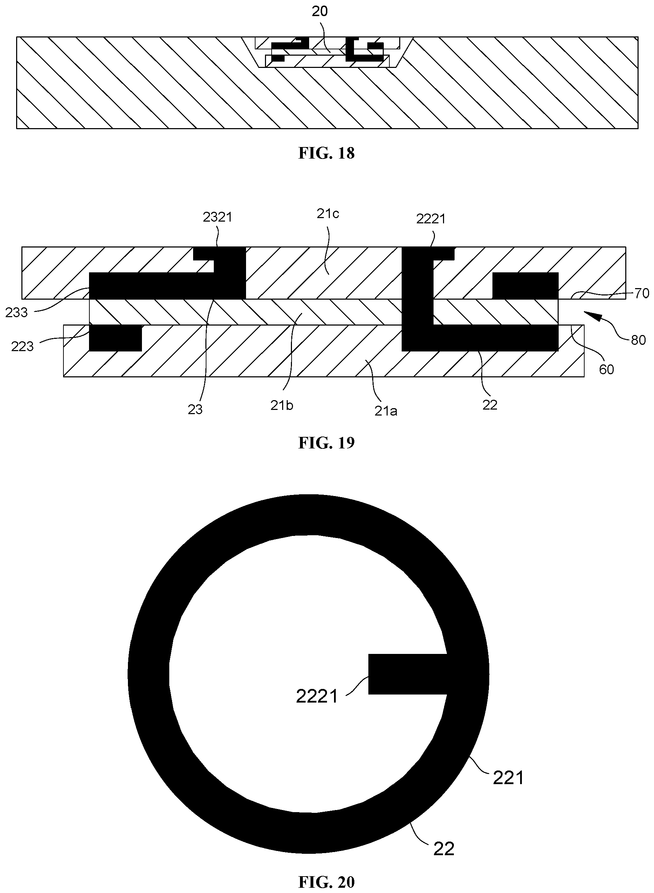

A detection device 20 in this embodiment is provided on an outer surface of a safety valve 15. FIG. 18 is a schematic diagram showing mounting of the detection device 20 on a safety valve.

FIG. 19 is a sectional view of the detection device 20. The substrate 21 in this embodiment has three layers. A lower substrate 21a is in the shape of a thin plate or a slice, with a small thickness usually not greater than 2 mm, preferably 1 mm or below. An intermediate substrate 21b is also in the shape of a thin plate or a slice, with a thickness close to that of the lower substrate 21a, but preferably less than that of the lower substrate 21a, for example, 50% of the thickness of the lower substrate 21a. A contour of the intermediate substrate 21b is close to that of the lower substrate 21a, but is slightly smaller than that of the lower substrate 21a, and a first platform 60 extending transversely is formed on a periphery of a joint between the intermediate substrate and the lower substrate. When an electrolyte leaks from the safety valve 15, the electrolyte flows upward along an outer wall of the substrate 21 and flows into the first platform 60.

A contour of an upper substrate 21c is close to that of the intermediate substrate 21b, but is slightly greater than that of the intermediate substrate 21b, and a second platform 70 extending transversely is formed on a periphery of a joint between the upper substrate and the intermediate substrate. The second platform 70 is opposite to the first platform 60 and is spaced apart therefrom by a distance, so that a liquid inlet 80 open in a peripheral direction is formed between the first platform 60, the second platform 70, and the outer wall of the intermediate substrate 21. During use, the electrolyte enters the first platform 60. Since the intermediate substrate 21b has a small thickness, a small amount of electrolyte can fill the liquid inlet 80, so that the electrolyte is connected to the upper second platform 70. That is, in this embodiment, a detection area 211 is located on a periphery of the substrate 21.

Still referring to FIG. 19, a first detection strip 22 is provided at the joint of the lower substrate 21a and the intermediate substrate 21b, and a second detection strip 23 is provided at the joint of the intermediate substrate 21b and the upper substrate 21c. The first detection strip 22 and the second detection strip 23 are spaced apart by the substrate 21 and thus are not in contact with each other.

The first detection strip 22 has a first collecting terminal 2221 and a first detection portion 223. The first collecting terminal 2221 penetrates upward through the intermediate substrate 21b to extend to a top surface of the upper substrate 21c and is connected to a first connecting end 2131. The first detection portion 223 extends around a circumference of the lower substrate 21a, and the first detection portion 223 is exposed in the first platform 60, that is, the first detection portion 223 is exposed in the liquid inlet 80, so that the electrolyte can be in contact with the first detection portion 223.

Similarly, the second detection strip 23 has a second collecting terminal 2321 and a second detection portion 233. The second collecting terminal 2321 extends upward to the top surface of the upper substrate 21c and is connected to a second connecting end 2132. The second detection portion 233 extends around a circumference of a top insulating layer 300, and the second detection portion 233 is exposed in the second platform 70, that is, the second detection portion 233 is exposed in the liquid inlet 80, so that the electrolyte can be in contact with the second detection portion 233.

As can be seen from the above structure, when the electrolyte flows into the liquid inlet 80, the liquid is in contact with the first detection portion 223 and the second detection portion 233, so that the first detection portion 223 and the second detection portion 233 are connected to each other, and thus the first detection strip 22 is connected to the second detection strip 23. Therefore, whether the electrolyte leaks can be determined by collecting a potential difference and/or a current between the first connecting end 2131 and the second connecting end 2132, and then whether the safety valve 15 is opened is determined, to reflect an operating state of a battery.

Specifically, as shown in FIGS. 19 and 20, the first detection strip 22 includes a ring-shaped first body 221, and the first body 221 is embedded in a top surface of the lower substrate 21a and is concentrically provided with the lower substrate 21a. A periphery of the first body 221 is exposed in the first platform 60, that is, the periphery of the first body 221 is the first detection portion 223 described above. An upper portion of the first body 221 extends upward to the top surface of the upper substrate 21c as a first collecting end.

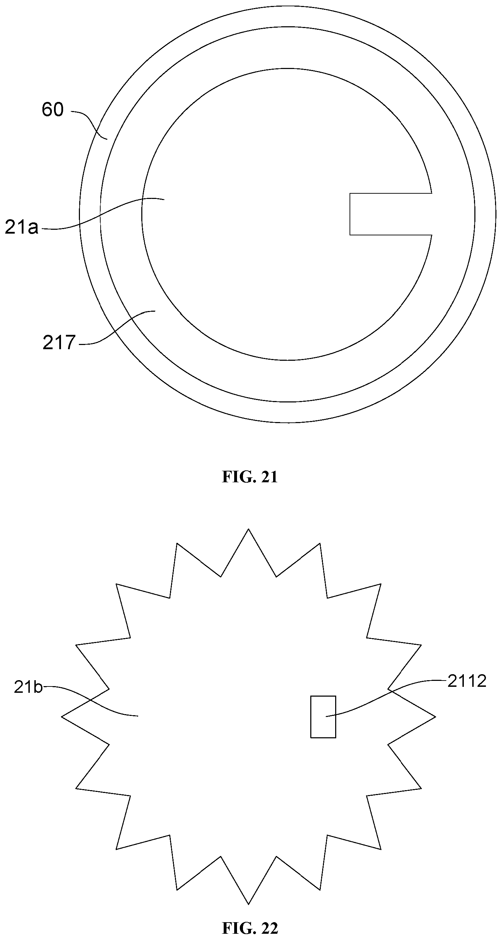

As shown in FIG. 21, a first mounting groove 217 adapted to the shape of the first body 221 is provided in an upper surface of the lower substrate 21a, and a distance is reserved between the first mounting groove 217 and an outer side wall of the lower substrate 21a. The distance is the first platform 60 as mentioned above.

As shown in FIG. 22, the intermediate substrate 21b may be a circular slice or a toothed slice, preferably a toothed slice, that is, a toothed notch groove is formed in a periphery of the intermediate substrate 21b, and an outer end point of the notch groove does not exceed peripheries of the first detection strip 22 and the second detection strip 23, so that the peripheries of the first detection strip 22 and the second detection strip 23 can be exposed in the liquid inlet 80. A first opening 2112 running through an upper surface and a lower surface is further provided in the intermediate substrate 21b, and the first opening 2112 is configured to allow the first detection strip 22 to pass through upward.

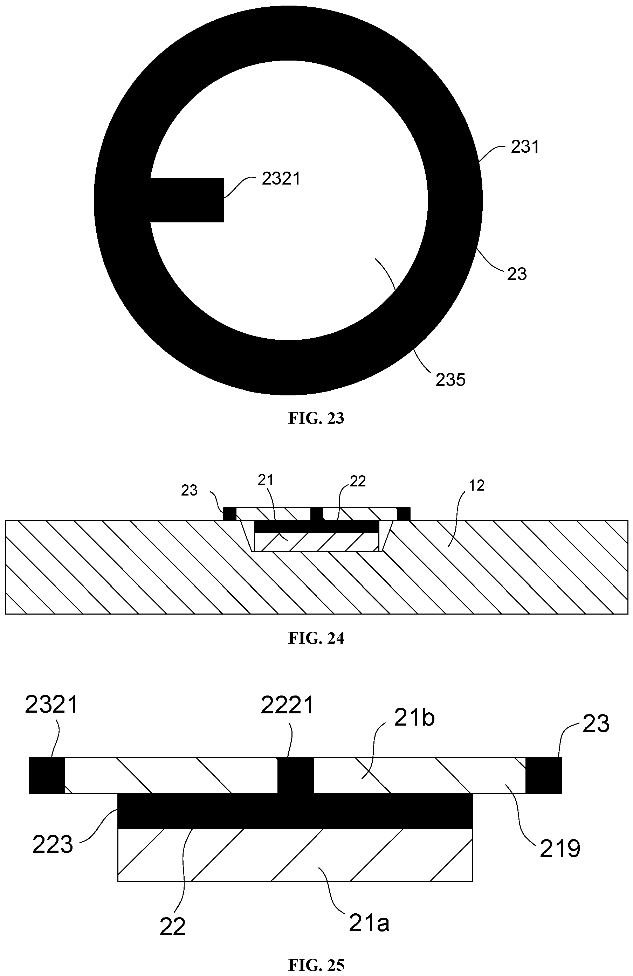

As shown in FIG. 23, the second detection strip 23 includes a ring-shaped second body 231, and a second opening 235 that is vertically through is formed in a middle portion of the second body 231. The second opening 235 is configured to allow the first detection strip 22 to pass through upward. The second body 231 is embedded in a bottom surface of the upper substrate 21c, and the second body 231 is concentrically provided with the upper substrate 21c. A periphery of the second body 231 is exposed in the second platform 70, that is, the periphery of the second body 231 is the second detection portion 233 described above. As shown in FIG. 23, an upper portion of the second body 231 extends upward to the top surface of the upper substrate 21c as a second collecting end.

### Embodiment 6

A detection device 20 in this embodiment is provided on a metal housing of a battery, that is, the detection device 20 is necessarily provided on a conductive material.

FIG. 25 is a sectional view of the detection device 20. It can be seen that a substrate 21 in this embodiment has an upper layer and a lower layer, and a first detection strip 22 is provided between the two layers. A lower substrate 21a is in the shape of a slice or a thin plate, having a thickness that should not be excessively large, is usually not greater than 2 mm, and is preferably 1 mm. A periphery of the first detection strip 22 is exposed on an outer side of the detection device 20, that is, the periphery of the first detection strip 22 is in contact with the outside air. The periphery is the first detection portion 223 and may be considered as a detection area 211 in this embodiment. A contour of the first detection strip 22 is close to that of the lower substrate 21a, or slightly smaller than that of the lower substrate 21a, so that the electrolyte can be quickly in contact with the first detection strip 22 as long as the electrolyte flows to above the lower substrate 21, thus improving accuracy and timeliness of detection.

In this embodiment, the first detection strip 22 is in the shape of a circular piece, or may be in the shape of a ring or in other slice-like shapes. A first collecting terminal 2221 on an upper portion of the first detection strip 22 extends to a top surface of the upper substrate 21c and is connected to a first connecting end 3121 as a first collecting end.

A contour of the upper substrate 21c is greater than that of the lower substrate 21a, and an extending portion 219 extending outward transversely is provided on a periphery of the upper substrate 21c. A bottom surface of the extending portion 219 is attached to an outer surface of the metal housing of the battery, and a second detection strip 23 is provided on the extending portion 219. A bottom of the second detection strip 23 is exposed on the bottom surface of the extending portion 219 to be in contact with the outer surface of the metal housing of the battery. A second collecting terminal 2321 at a top of the second detection strip 23 extends to the top surface of the upper substrate 21c and is connected to a second connecting end 3122 as a second collecting end.

As can be seen from the above structure, the first detection strip 22 and the second detection strip 23 are spaced apart by the upper substrate 21c, and thus are not in contact with each other. In other words, under normal circumstances, a resistance value between the first detection strip 22 and the second detection strip 23 is infinite. Once the electrolyte is sprayed out, the electrolyte is in contact with the first detection strip 22 while being in contact with the metal housing of the battery, and thus the first detection strip 22 is connected to the second detection strip 23. Therefore, whether the electrolyte leaks can be determined by collecting a potential difference and/or a current between the first connecting end 2131 and the second connecting end 2132, and then whether a safety valve 15 is opened is determined, to reflect an operating state of a battery.

The above is the description of the embodiments of the present disclosure. The above description of the disclosed embodiments enables those skilled in the art to achieve or use the present disclosure. Multiple modifications to these embodiments are readily apparent to those skilled in the art. The general principles defined herein may be practiced in other embodiments without departing from the spirit or scope of the present disclosure. Therefore, the present disclosure is not limited to these embodiments shown herein, but falls within the widest scope consistent with the principles and novel features disclosed herein.

## Claims

1. A battery safety valve detection device, comprising a substrate (21) fixedly arranged on an outer side of a safety valve (15), and a first detection strip (22) and a second detection strip (23) that are arranged on the substrate (21), wherein the substrate (21) is made of an insulating material, the first detection strip (22) and the second detection strip (23) each are made of a conductor material, and there is a potential difference between the first detection strip (22) and the second detection strip (23); and a detection area (211) is defined on a side of the substrate (21) close to the safety valve (15), the first detection strip (22) and the second detection strip (23) extend in the detection area (211), the first detection strip (22) and the second detection strip (23) in the detection area (211) are at least partially exposed on a surface of the substrate (21), and when the safety valve is opened, an electrolyte pollutes the detection area (211), so that the potential difference and/or a current between the first detection strip (22) and the second detection strip (23) changes.

2. The battery safety valve detection device according to claim 1, wherein in the detection area (211), the first detection strip (22) and the second detection strip (23) are not connected to each other, and preferably extend side by side and are spaced apart by a distance; and the first detection strip (22) and the second detection strip (23) cover most of a surface of the detection area (211).

3. The battery safety valve detection device according to claim 2, wherein multiple holes (212) open toward a position of the safety valve (15) are further defined in the detection area (211), and the multiple holes (212) are densely distributed between the first detection strip (22) and the second detection strip (23).

4. The battery safety valve detection device according to claim 3, wherein in the detection area (211), both the first detection strip (22) and the second detection strip (23) are spirally arranged.

5. The battery safety valve detection device according to claim 3, wherein the multiple holes (212) each have a diameter of 0.2-1 mm, and a distance between circle centers of adjacent holes (212) is 0.4-1.5 mm.

6. The battery safety valve detection device according to claim 3, wherein all or several of the multiple holes (212) run through an upper surface and a lower surface of the substrate (21); a protective layer (24) is arranged on a surface of the substrate (21) facing away from the safety valve (15), the protective layer (24) shields outer ends of all the multiple holes, and the protective layer (24) has a thickness of 5-20 µm.

7. The battery safety valve detection device according to claim 1, wherein the substrate (21) has a sheet structure with a thickness of 0.2-1 mm, the first detection strip (22) and the second detection strip (23) each have a thickness of 50-200 µm and a width of about 0.2-1 mm, and the first detection strip (22) and the second detection strip (23) are copper foil or aluminum foil; and the first detection strip (22) and the second detection strip (23) are arranged on the substrate (21) by etching.

8. The battery safety valve detection device according to claim 1, wherein in the detection area (211), the first detection strip (22) and the second detection strip (23) are arranged on a lower surface of the substrate (21).

9. A battery, comprising a housing and a cover plate arranged on a top of the housing, wherein a safety valve is arranged on the cover plate, and the battery safety valve detection device according to claim 1 is arranged on an outer side of the safety valve.

10. A battery safety valve detection method, comprising:
adopting the battery safety valve detection device according to claim 1;
acquiring the potential difference and/or the current between the first detection strip (22) and the second detection strip (23); and
determining that the safety valve is opened when the potential difference and/or the current changes.
